# EUROPÄISCHE PATENTANMELDUNG

(11) **EP 1 621 756 A1**
(43) Veröffentlichungstag der Anmeldung: **01.02.2006**
(21) Anmeldenummer: 05405377.2
(22) Anmeldetag: 10.06.2005
(51) Int. Cl.: F02M 31/10

(54) **Vorrichtung zum Temperieren von Kraftstoff**

(30) Priorität: 27.07.2004 CH 12652004
(71) Anmelder: Kruse, Bruno, 3296 Arch (CH)
(72) Erfinder: Kruse, Bruno, 3296 Arch (CH)
(74) Vertreter: Roshardt, Werner Alfred

(57) **Zusammenfassung**

Eine Vorrichtung zum Temperieren von Kraftstoff für Verbrennungsmotoren, insbesondere Dieselmotoren, mit Wasserkühlung, umfasst einen Wärmetauscher (15), welcher zur Wärmeübertragung mit einer Kühlwasserleitung und einer Kraftstoffleitung koppelbar ist. Der Wärmetauscher (15) weist eine innere, rohrartige Kammer (23) auf, welche mit der Kühlwasserleitung koppelbar ist, sowie eine äussere Kammer (24), welche die innere Kammer (23) mantelseitig umschliesst und mit der Kraftstoffleitung koppelbar ist. Eine maximale radiale Innenweite der äusseren Kammer (24) beträgt höchstens ein Viertel, bevorzugt höchstens ein Sechstel, einer maximalen radialen Innenweite der inneren Kammer (23). Durch die Dimensionierung der Vorrichtung ergibt sich eine Zirkulation des Kraftstoffs in der äusseren Kammer, durch welche eine optimale, d. h. effiziente und gleichmässige Temperierung des Kraftstoffs erreicht wird. Dies hat eine feine und gleichmässige Zerstäubung des Kraftstoffs in der Einspritzeinrichtung (oder in einem Vergaser) zur Folge und letztlich eine möglichst vollständige und gleichmässige Verbrennung in den Zylindern. Dies führt zu einem geringeren Kraftstoffverbrauch und besseren Abgaswerten. Die Vorrichtung ist zudem einfach aufgebaut, kompakt und platzsparend.

## Beschreibung

### Technisches Gebiet

Die Erfindung betrifft eine Vorrichtung zum Temperieren von Kraftstoff für Verbrennungsmotoren, insbesondere Dieselmotoren, mit Wasserkühlung, umfassend einen Wärmetauscher, welcher zur Wärmeübertragung mit einer Kühlwasserleitung und einer Kraftstoffleitung koppelbar ist, wobei der Wärmetauscher eine innere, rohrartige Kammer aufweist, welche mit der Kühlwasserleitung koppelbar ist, sowie eine äussere Kammer, welche die innere Kammer mantelseitig umschliesst und mit der Kraftstoffleitung koppelbar ist. Die Erfindung betrifft weiter einen Verbrennungsmotor mit einer derartigen Vorrichtung.

### Stand der Technik

Dieselmotoren sind heute weit verbreitet. Wegen ihres gegenüber Benzinmotoren geringeren Verbrauchs und deshalb geringeren Ausstosses an Kohlendioxid werden Dieselmotoren besonders auch für Autos propagiert. In Dieselmotoren wird Dieselöl durch eine Kraftstoffleitung einer Einspritzvorrichtung zugeführt und von dieser direkt in die Zylinder eingespritzt. Dabei wird das Dieselöl zerstäubt. Der zerstäubte Kraftstoff entzündet sich durch den Kontakt mit vorgängig im Zylinder komprimierter und dadurch erwärmter Luft.

Die Wirtschaftlichkeit und die Abgaswerte eines Dieselmotors hängen in hohem Mass von der Qualität der Einspritzung ab. So soll das Dieselöl möglichst fein und gleichmässig zerstäubt werden, damit die Verbrennung im Zylinder räumlich gleichmässig verteilt und möglichst vollständig stattfindet.

Wie gut das Dieselöl zerstäubt wird, hängt neben der Qualität des Kraftstoffs und den durch den Motor gegebenen Parametern (Ausbildung der Einspritzvorrichtung, Druck des Kraftstoffs, Form und Grösse der Zylinder etc.) massgeblich von der Temperatur des Dieselöls ab. Kaltes Dieselöl ist dickflüssig und lässt sich deshalb schlecht zerstäuben. Durch Erwärmung des Diesel-Kraftstoffs wird dieser dünnflüssiger und damit besser zerstäubbar. Dieser Effekt ist beim an sich dickflüssigeren Dieselöl grösser als beim vergleichsweise dünnflüssigen Benzin. Allerdings sollte die Temperatur des Dieselöls auch nicht einen bestimmten Maximalwert überschreiten, weil sonst der Verbrennungsvorgang im Zylinder nicht mehr optimal ablaufen kann.

Die US 4,098,231 (Oliver T. Davis et al.) offenbart eine Vorrichtung zur Verbesserung der Effizienz und zur Reduktion der Kohlenwasserstoff-Emissionen von Verbrennungsmotoren. Die Vorrichtung umfasst einen Wärmetauscher mit einem Wassertank, in welchen Kühlwasser eingeleitet wird, so dass Kraftstoff erwärmt werden kann, welcher in einem helixartigen Rohr durch den Wassertank geführt wird. Mit dem Wassertank ist ein zweiter, nur teilweise mit Wasser gefüllter Tank verbunden, welcher zusätzlich eine Luftzufuhr aufweist. Zusätzlich ist der Vakuumeingang des Vergasers mit dem ungefüllten Teil des zweiten Tanks verbunden, so dass warmer Wasserdampf dem Benzin-Luft-Gemisch zugeführt werden kann.

Die CA 2,275,024 (Luc Beaudoin) zeigt eine Vorrichtung zum Stabilisieren der Kraftstofftemperatur bei kalter oder heisser Witterung. In einem wassergekühlten Verbrennungsmotor ist ein Wärmetauscher an die Kühlwasser- und die Kraftstoffleitung angeschlossen, wobei der Wärmetauscher mit mehreren regelbaren Ventilen und Temperatursensoren sowie mit einer Vorrichtung zum lonisieren des Kraftstoffs versehen ist.

Die genannten Vorrichtungen weisen einen komplexen Aufbau auf und sind entsprechend teuer und anfällig auf Störungen. Sie benötigen ausserdem viel Platz im Motorraum und können somit nicht bei allen Dieselmotoren nachgerüstet werden.

Die DE 36 42 299 A1 (Anton Katt) beschreibt ein Verfahren zur Veränderung des Aggregatszustandes flüssiger Kraftstoffe, bei welchem der Kraftstoff durch einen Durchlauferhitzer geführt wird. Aufgrund der Erwärmung des Kraftstoffs soll im Vergaser anstelle einer Zerstäubung eine Überführung in den Gaszustand stattfinden, wodurch der Wirkungsgrad des Motors verbessert wird. Der Durchlauferhitzer weist zwei Rohrstutzen auf, an welche die Kühlwasserleitung angeschlossen werden kann, und welche mit einer Kammer verbunden sind, welche die Kraftstoffleitung umschliesst.

Diese Vorrichtung erscheint kompakter und ist einfacher aufgebaut als die vorher beschriebenen. Allerdings kann ein Verdampfen von Kraftstoff Probleme schaffen. Ausserdem geht die Konstruktion der Vorrichtung nur in sehr allgemeiner Weise aus der Druckschrift hervor. Massnahmen, durch welche eine hohe Effizienzsteigerung eines Motors durch den Einsatz eines entsprechend einfach aufgebauten Wärmetauschers erreicht werden können, sind nicht offenbart.

Aus der US 4,218,999 (Kenneth O. Shearer) ist eine Vorrichtung bekannt, durch welche Kraftstoff für Diesel- oder Benzinmotoren vor der Verbrennung erwärmt werden kann. Dadurch soll ein effizienter und zuverlässiger Betrieb bei extrem tiefen Aussentemperaturen ermöglicht werden. Mittig in der Vorrichtung wird durch ein Rohr aus einem wärmeleitenden Material eine innere Kammer gebildet. Auf der Rohraussenseite ist eine helixartige Struktur aus einem ebenfalls wärmeleitenden Material ausgebildet. Das Rohr ist mantelseitig von einem Gehäuse umschlossen, welches einen Kraftstoffeinlass und einen Kraftstoffauslass aufweist, wobei die beiden Öffnungen jeweils nahe der Längsenden des Gehäuses entlang einer Geraden angeordnet sind, welche parallel ist zur Achse des Rohrs. Der Kraftstoff tritt durch den Einlass ein, wird durch die helixartige Struktur durch die zwischen dem Gehäuse und dem inneren Rohr gebildete äussere Kammer geführt, tritt beim Auslass wieder aus und gelangt dann über den Kraftstofffilter zum Vergaser. Das Gehäuse der Vorrichtung weist einen Montagerahmen auf, damit die Vorrichtung im Motor befestigt werden kann.

Die offenbarte Vorrichtung ist dem Betrieb bei extrem tiefen Aussentemperaturen angepasst. Bei normalen Umweltbedingungen ist nur eine geringe Effizienzsteigerung zu erwarten. Die Vorrichtung ist zudem relativ gross und benötigt einen Befestigungspunkt im Motor. Sie lässt sich deshalb nicht bei allen Motoren nachrüsten, und der Einbau gestaltet sich recht aufwändig.

### Darstellung der Erfindung

Aufgabe der Erfindung ist es, eine dem eingangs genannten technischen Gebiet zugehörende Vorrichtung zum Temperieren von Kraftstoff zu schaffen, welche effizient funktioniert, einfach und kompakt aufgebaut ist und sich einfach bei bestehenden Motoren nachrüsten lässt.

Die Lösung der Aufgabe ist durch die Merkmale des Anspruchs 1 definiert. Gemäss der Erfindung beträgt eine maximale radiale Innenweite der äusseren Kammer höchstens ein Viertel, bevorzugt höchstens ein Sechstel, einer maximalen radialen Innenweite der inneren Kammer.

Als radiale Innenweite der äusseren Kammer wird hier eine Innenweite bezeichnet, welche senkrecht zur Innenfläche einer Begrenzungswand der äusseren Kammer verläuft, wobei die Begrenzungswand die innere Kammer kontaktiert, bzw. auf ihrer Aussenfläche eine Begrenzung der inneren Kammer bildet.

Die äussere Kammer ist also im Vergleich zu bereits bekannten Lösungen nicht ein Zwischenraum zwischen einem koaxial angeordneten äusseren Rohr und einem inneren Rohr, wobei die Innenweite des Zwischenraums mit dem Innendurchmesser des inneren Rohrs vergleichbar ist. Die äussere Kammer bildet vielmehr eine das innere Rohr eng umschliessende, gefässartige Hülle. Durch die angegebenen Dimensionen der beiden Kammern für den Kraftstoff und das Kühlwasser wird eine Zirkulation des Kraftstoffs in der äusseren Kammer bewirkt, durch welche eine optimale, d. h. effiziente und gleichmässige Temperierung des Kraftstoffs erreicht wird. Dies hat eine feine und gleichmässige Zerstäubung des Kraftstoffs in der Einspritzeinrichtung (oder in einem Vergaser) zur Folge und letztlich eine möglichst vollständige und gleichmässige Verbrennung in den Zylindern. Versuche haben ergeben, dass sich durch den Einbau einer Vorrichtung mit einem derartigen Wärmetauscher in einen Dieselmotor durch eine Erwärmung des Kraftstoffs ein um bis zu 27 % geringerer Dieselverbrauch erreichen lässt. Gleichzeitig verbessern sich die Abgaswerte, und der Motor wird leistungsstärker.

Die erfindungsgemässe Vorrichtung ist zudem einfach aufgebaut, kompakt und platzsparend. Durch ihren Einbau wird der Platzbedarf der Kühlwasserzuführung nur unwesentlich vergrössert. Weil die Vorrichtung vergleichsweise leicht ist, genügt eine Befestigung an der Kühlwasserleitung und an den Kraftstoffleitungen, es ist somit kein zusätzliches Befestigungsmittel im Motorraum notwendig. Die erfindungsgemässe Vorrichtung lässt sich bei einem vorhandenen Motor nachrüsten oder kann schon bei der Konstruktion und bei der Herstellung des Motors ("ab Werk") vorgesehen werden.

Die Vorrichtung eignet sich sowohl zum Erwärmen als auch zum Abkühlen des Kraftstoffs, abhängig von der Temperatur des Kühlwassers: Wird beispielsweise im Motorraum erhitztes Kühlwasser vor dem Durchgang durch den Kühler in die innere Kammer geführt, so ergibt sich eine Erwärmung des Kraftstoffs. Wird hingegen beispielsweise die Kühlflüssigkeit der Klimaanlage verwendet (oder kalte, vom Lufteinlass für die Fahrzeuginnenbelüftung kommende Luft), indem der Wärmetauscher mit der entsprechenden Leitung gekoppelt wird, lässt sich der Kraftstoff abkühlen. Ob eine Erwärmung oder eine Abkühlung stattfinden soll hängt einerseits von der Motorkonstruktion ab, andererseits auch vom Betriebszustand des Fahrzeugs. Es kann somit von Vorteil sein, wenn wahlweise eine Erwärmung oder eine Abkühlung des Kraftstoffs erfolgen kann. Zu diesem Zweck sind mit Vorteil mehrere Wärmetauscher vorgesehen, zwischen welchen mittels Ventilen und Magnetschaltern umgeschaltet werden kann. Eine Sensorik kann vorgesehen sein, um den Erwärmungs- bzw. Abkühlungsvorgang automatisch zu steuern, so dass die Kraftstofftemperatur stets im optimalen Bereich liegt.

Die Erfindung wird zwar bevorzugt bei Dieselmotoren angewendet und ist im Betrieb mit "Biodiesel" (umgewandelte pflanzliche Öle, z. B. Rapsöl) gleichermassen effektiv. Auch bei Benzinmotoren wird der Kraftstoff aber durch die Erwärmung dünnflüssiger und kann im Vergaser oder der Einspritzvorrichtung besser in der Luft verteilt werden. Dies führt in der Folge im Zylinder zu einer vollständigeren und gleichmässigeren Verbrennung und damit auch beim Benzinmotor zu einem besseren Laufverhalten, einer höheren Effizienz und verbesserten Abgaswerten.

Die Erfindung ist im Weiteren anwendbar bei Heizbrennern, zum Temperieren des Brennstoffs (Heizöl). Dabei wird anstelle der Kühlwasserleitung die Warmwasserleitung an die innere Kammer der erfindungsgemässen Vorrichtung angeschlossen. Bei Heizöl und Dieselkraftstoff handelt es sich um denselben Stoff; ausserdem wird das Heizöl - ähnlich wie der Dieselkraftstoff im Zylinder eines Dieselmotors - im Heizbrenner in feinste Tröpfchen zerstäubt, so dass es zündfähig wird und durch Zuführung von Luft (Sauerstoff) restlos verbrennen kann. Somit ergeben sich durch den Einsatz der Erfindung auch bei Heizbrennern die erfindungsgemässen Vorteile, nämlich eine gleichmässigere und vollständigere Verbrennung des vorgewärmten Brennstoffs und somit eine höhere Effizienz der Heizanlage und geringere Emissionen.

Bevorzugt ist die innere, rohrartige Kammer im Wesentlichen kreiszylindrisch mit einem Durchmesser von 15-40 mm, und ein Hauptteil der äusseren Kammer weist eine radiale Innenweite von 1-3 mm auf. Die rohrartige Kammer wird zweckmässigerweise dem Durchmesser der Kühlwasserleitung angepasst, so dass eine einfache Anbringung an der Kühlwasserleitung ermöglicht und der Kühlwasserkreislauf nicht zusätzlich belastet wird. Bei der angegebenen Innenweite der äusseren Kammer findet eine optimale Zirkulation des Kraftstoffs statt. Die Länge der Hauptachse des Wärmetauschers beträgt beispielsweise 100-200 mm. Der Aufbau der erfindungsgemässen Vorrichtung ist somit sehr kompakt und erlaubt eine Nachrüstung auch bei engsten Platzverhältnissen.

Bei gewissen Anwendungen, z. B. in grossen oder sehr kleinen Motoren, können die angegebenen Dimensionen variiert und erwarteten Durchflussmengen des Kühlwassers bzw. des Kraftstoffs angepasst werden. Bei grossen Dieselmotoren für Lastwagen kann beispielsweise der Innendurchmesser der inneren Kammer bis zu 120 mm oder gar 150 mm betragen.

Mit Vorteil ist der Wärmetauscher als doppelwandiges Rohr ausgebildet, wobei die äussere Kammer in einer Rohrwand vorgesehen ist. Die zwei Rohrwände sind also so miteinander fluiddicht verbunden, dass die geschlossene Kammer gebildet wird, beispielsweise indem die beiden Wände an den axialen Rohrenden miteinander verschweisst oder verklebt werden oder indem je ein Endstück aufgebracht wird.

Alternativ ist die äussere Kammer auf die innere, rohrartige Kammer aufgesetzt, oder die äussere Kammer ist als Einsatz für ein Kühlwasserrohr ausgebildet.

Vorzugsweise umfasst die Vorrichtung einen ersten Stutzen zur Kraftstoffzuführung sowie einen zweiten Stutzen zur Kraftstoffabführung, welche mit der äusseren Kammer gekoppelt sind. Der erste Stutzen führt an einem ersten Kopplungsort von der äusseren Kammer im Wesentlichen radial weg, und der zweite Stutzen weist an einem zweiten Kopplungsort von der äusseren Kammer im Wesentlichen radial weg. Um die radiale Ausdehnung der erfindungsgemässen Vorrichtung zu begrenzen, sind die Stutzen anschliessend an die innersten, radial wegführenden Abschnitte mit Vorteil gekröpft, wobei die Richtung des weiterführenden, abgekröpften Abschnitts den Platzverhältnissen im Motor, bei der Einbaustelle der Vorrichtung Rechnung tragen kann. Die genannte Anordnung der Stutzen lässt sich leicht realisieren und erlaubt einen einfachen Anschluss der Kraftstoffleitung. Ausserdem führen die radialen Ein- und Auslässe zu einer gleichmässigen Zirkulation des Kraftstoffs in der äusseren Kammer.

Alternativ kann die Kraftstoffleitung an den Stirnenden des Wärmetauschers angekoppelt werden, oder die Stutzen führen schräg von der äusseren Kammer weg.

Mit Vorteil liegt der erste Kopplungsort dem zweiten Kopplungsort bezüglich einer Hauptachse des Wärmetauschers im Wesentlichen diametral gegenüber. Diese Anordnung stellt sicher, dass der Kraftstoff in der äusseren Kammer umgewälzt wird und nicht beispielsweise nur entlang ungefähr einer axialen Mantellinie vom ersten zum zweiten Kopplungsort fliesst. An einander gegenüberliegend angebrachten Stutzen kann zudem die Kraftstoffleitung ohne gegenseitige Behinderung befestigt werden.

Alternativ sind die Kopplungsorte nicht gegenüberliegend angeordnet. In diesem Fall kann eine gute Umwälzung durch eine schräge Anordnung der Stutzen oder durch entsprechende Umlenkelemente für den Kraftstoff erreicht werden.

Bevorzugt weist die äussere Kammer einen ersten Bereich auf und einen zusammenhängenden, flächenmässig kleineren zweiten Bereich mit einer gegenüber dem ersten Bereich vergrösserten radialen Innenweite. Dabei sind sowohl der erste als auch der zweite Kopplungsort für die Stutzen im zweiten Bereich vorgesehen. Dadurch wird sichergestellt, dass der Treibstofffluss auch dann gewährleistet ist, wenn z. B. Schmutz oder Luft durch die Kraftstoffzuleitung (bzw. -ableitung) in die äussere Kammer gelangen sollte, was im engeren ersten Bereich zu Verstopfungen führen könnte. Durch die Wahl der Dimensionen und der Anordnung des zweiten Bereichs kann die Zirkulation des Kraftstoffs in der äusseren Kammer beeinflusst werden. Gleichzeitig kann der Druckabfall des Kraftstoffs in der erfindungsgemässen Vorrichtung so gewählt werden, dass eine zuverlässige Kraftstoffzufuhr zum Motor auch ohne Auswechseln der Kraftstoffpumpe gewährleistet bleibt.

Alternativ ist die äussere Kammer mit stufenlos variierender Innenweite derart ausgebildet, dass ein zusammenhängender Bereich gebildet ist, durch welchen der Kraftstoff im Prinzip direkt vom ersten zum zweiten Stutzen fliessen kann. Falls kein derartiger "Notfallkorridor" ausgebildet ist, kann die Gefahr von Verstopfungen beispielsweise durch die Anbringung von (zum Kraftstofffilter zusätzlichen) Filtern verringert werden.

Mit Vorteil ist der zweite Bereich durch einen tangential umlaufenden Wulst gebildet. Ein solcher lässt sich auf einfache Art und Weise herstellen, z. B. indem die Aussenwand der äusseren Kammer vor und hinter derjenigen Stelle, an welcher der Wulst gebildet werden soll, mittels einer Zange kontrolliert in axialer Richtung zusammengedrückt wird. Zusammen mit der radialen Zu- und Ableitung des Kraftstoffs sowie mit der diametral gegenüberliegenden Anordnung der Stutzen wird überdies in der äusseren Kammer ein Zirkulationsmuster bewirkt, bei welchem der Kraftstoff gründlich umgewälzt wird.

Alternativ kann der Wulst beispielsweise schräg der Aussenwand der äusseren Kammer entlang führen, und/oder der Wulst läuft nur teilweise um den Wärmetauscher um.

Vorzugsweise ist der Wärmetauscher aus nichtrostendem Stahl (INOX), insbesondere aus Chromstahl, gefertigt. Diese Materialien weisen eine gute Wärmeleitfähigkeit auf, sind gut zu verarbeiten und wenig anfällig auf Korrosion.

Bevorzugt weist der Wärmetauscher an seinen Enden Abschnitte auf, welche zum Befestigen der Kühlwasserleitung ausgebildet sind. Die Kühlwasserleitung wird insbesondere auf diese Abschnitte aufgeschoben. Beispielsweise sind auf der Aussenseite der Abschnitte Riffelungen vorgesehen, durch welche ein guter Kraftschluss mit der Innenseite der aufgeschobenen Enden der Kühlwasserleitung erreicht wird. Die endgültige Befestigung erfolgt mit Vorteil durch Briden. Möglich sind auch Schraub- oder Klemmanschlüsse für die Kühlwasserleitung.

Es ist bekannt, dass die Verbrennung in Dieselmotoren unterstützt werden muss, solange sich diese durch den Betrieb noch nicht ausreichend aufgewärmt haben (Kaltstart). Früher erfolgte diese Unterstützung mit sogenannten Glühkerzen (der Motor wurde "vorgeglüht"), heute übernimmt meist eine elektronische Motorsteuerung diese Aufgabe, indem bei kalter Motortemperatur die Einspritzung des Dieselöls später (bei höherer Verdichtung) erfolgt. Allerdings bedeutet eine Verschiebung des Einspritzzeitpunkts, dass der Motor während der Kaltstartphase nicht im eigentlich optimalen Bereich betrieben werden kann. Weil gerade Personenwagen in städtischen Gebieten oft nur für kurze zusammenhängende Strecken verwendet werden, ist es besonders bei Dieselmotoren für Autos von Vorteil, wenn die Kaltstartphase verkürzt werden kann.

Vorzugsweise weist die erfindungsgemässe Vorrichtung deshalb zusätzlich eine am Wärmetauscher angeordnete Heizeinrichtung und eine Heizungssteuerung auf. Die Steuerung ist derart ausgebildet, dass die Heizeinrichtung bei einer nicht ausreichenden Temperatur des Kühlwassers eingeschaltet und bei ausreichender Temperatur ausgeschaltet wird. Dadurch wird das Kaltstartverhalten des Motors verbessert und die Kaltstartphase verkürzt. Die Heizeinrichtung ist beispielsweise als elektrische Widerstandsheizung ausgebildet, wobei ein Heizdraht auf der Aussen- und/oder Innenseite der äusseren Kammer verläuft. Die Heizungssteuerung umfasst einen oder mehrere Thermostaten, so dass die Kühlwasser- und/oder die Kraftstofftemperatur nach Durchgang durch den Wärmetauscher gemessen werden kann.

Die Heizeinrichtung kann besonders kostengünstig ausgeführt werden, wenn auf existierende Bestandteile zurückgegriffen wird. So kann eine handelsübliche Heizungsmatte eingesetzt werden, welche so angeordnet ist, dass sie den Wärmetauscher möglichst vollständig einhüllt. Die Matte dient so gleichzeitig als Isolation für den Wärmetauscher und stellt durch eine homogene Heizwirkung auf die Aussenfläche des Wärmetauschers eine gleichmässige Erwärmung des in der äusseren Kammer befindlichen Kraftstoffs sicher. Ausserdem lässt sich eine derartige Anordnung sehr kompakt ausbilden, so dass die radiale Ausdehnung des Wärmetauschers nur geringfügig vergrössert wird.

Besonders wenn die erfindungsgemässe Vorrichtung zum Kühlen des Kraftstoffs eingesetzt wird, wobei das Kühlmittel der Klimaanlage zur Aufnahme der Überschusswärme des Kraftstoffs eingesetzt wird, wird dieses Kühlmittel mit Vorteil durch eine schraubenförmige Rohrschlange geleitet, welche mit ihrem Aussendurchmesser passend in die innere, rohrartige Kammer einschiebbar ist. Mittels dieses Einsatzes lässt sich auch bei einem geringeren Fluss des verwendeten Kühlmittels ein ausreichender Wärmeaustausch erreichen. Die Rohrschlange wird mit Vorteil aus nichtrostendem Stahl hergestellt, bevorzugt aus demselben Material wie der sie umgebende Teil des Wärmetauschers.

Alternativ wird das Kühlmittel direkt in die innere Kammer geleitet und dort aufgrund seines Drucks umgewälzt. Die Anpassung des Leitungsdurchmessers der Kühlmittelleitung (welcher üblicherweise deutlich geringer ist als derjenige der Kühlwasserleitung) erfolgt dann z. B. über Endkappen, welche an den Stirnseiten des Wärmetauschers angeordnet sind und passende Anschlüsse für die Kühlmittelleitung aufweisen. Auch diese Endkappen sind mit Vorteil - wie die anderen Teile des Wärmetauschers - aus nichtrostendem Stahl hergestellt.

Wird die vom Lufteinlass kommende, für die Fahrzeuginnenbelüftung bestimmte Luft zur Abkühlung des Kraftstoffs verwendet, so lässt sich der entsprechende Schlauch in der Regel auf einfache Weise mit dem Wärmetauscher derart verbinden, dass die Luft durch die innere Kammer geführt wird und überschüssige Wärme aus dem Kraftstoff aufnimmt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Ein Blockschema eines Verbrennungsmotors mit einer erfindungsgemässen Vorrichtung zum Temperieren des Kraftstoffs;
- Fig. 2A, B: schematische Darstellungen von Querschnitten durch den Wärmetauscher der erfindungsgemässen Vorrichtung, entlang der Längsachse bzw. senkrecht zur Längsachse;
- Fig. 3: eine schematische Aussenansicht des Wärmetauschers;
- Fig. 4A-C: Varianten für den Wärmetauscher mit unterschiedlich ausgebildeten Kraftstoffstutzen;
- Fig. 5: eine schematische Aussenansicht des Wärmetauschers mit angebrachten Kühlwasser- und Kraftstoffleitungen.

Grundsätzlich sind in den Figuren gleiche Teile mit gleichen Bezugszeichen versehen.

### Wege zur Ausführung der Erfindung

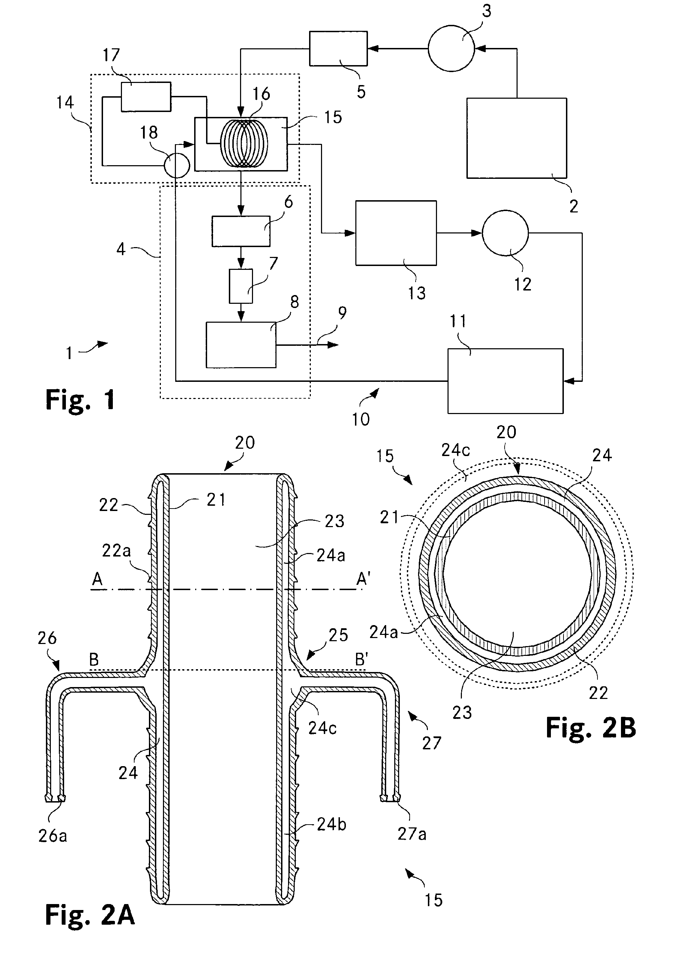

Die Figur 1 zeigt ein Blockschema eines Verbrennungsmotors mit einer erfindungsgemässen Vorrichtung zum Temperieren des Kraftstoffs. Vom Verbrennungsmotor 1 sind nur die für die Erfindung massgeblichen Bauteile schematisch dargestellt. Der Einbau erfolgt in Diesel- und in Benzinmotoren im Wesentlichen auf dieselbe Weise. Im Verbrennungsmotor 1 wird in üblicher Weise Kraftstoff aus einem Kraftstofftank 2 durch eine Kraftstoffpumpe 3 dem eigentlichen Motor 4 zugeführt. Zwischen der Kraftstoffpumpe 3 und dem Motor 4 ist ein Kraftstofffilter 5 angeordnet, um Verunreinigungen des Kraftstoffs zurückzuhalten und dadurch Schäden am Motor 4 zu vermeiden. Im Motor 4 gelangt der Kraftstoff in eine Einspritzvorrichtung 6 mit einer Düse 7, in welcher der Kraftstoff für die nachfolgende Verbrennung vorbereitet wird. In Dieselmotoren wird der Kraftstoff mit Hilfe einer oder mehrerer Pumpen durch jeweils eine Düse 7 unmittelbar in die Zylinder 8 eingespritzt, in welchen Luft bereits vorverdichtet worden ist. In Benzinmotoren wird zunächst in einem Vergaser oder einer Einspritzvorrichtung ein Benzin-Luft-Gemisch gebildet, welches dann durch Ventile in die Zylinder 8 eingelassen wird. Nach erfolgter Verbrennung werden die Abgase 9 aus den Zylindern 8 in eine an sich bekannte Auspuffanlage (mit Partikelfilter, Katalysator etc.) abgegeben.

Der Verbrennungsmotor 1 weist ausserdem einen Kühlkreislauf 10 auf. Aus einem Kühlwassertank 11 wird Kühlwasser - welches gegebenenfalls Zusätze, z. B. Frostschutz, enthält - durch eine Kühlwasserpumpe 12 im Kühlkreislauf 10 umgewälzt. Zunächst wird das Kühlwasser durch den Motor 4 geführt, wo es dort entstehende Wärme aufnimmt und abführt. In einem Kühler 13 wird die Wärme abgegeben und somit das Kühlwasser wieder abgekühlt. Im dargestellten Beispiel ist die Kühlwasserpumpe 12 zwischen dem Kühler 13 und dem Kühlwassertank 11 angeordnet, sie kann aber auch an einer anderen Stelle im Kühlkreislauf 10 vorgesehen sein.

Die erfindungsgemässe Vorrichtung 14 zum Temperieren des Kraftstoffs umfasst einen Wärmetauscher 15, welcher weiter unten noch detaillierter beschrieben wird. Der Wärmetauscher 15 weist zwei voneinander fluiddicht abgetrennte Durchführungen für Kraftstoff bzw. Kühlwasser auf, wobei jede der Durchführungen einen Zuführ- und einen Wegführstutzen aufweist. Der Wärmetauscher 15 ist zwischen dem Kraftstofffilter 5 und der Einspritzvorrichtung 6 in die Kraftstoffleitung und zwischen dem Motor 4 und dem Kühler 13 in den Kühlkreislauf 10 eingebaut. Das Kühlwasser hat nach dem Durchgang durch den Motor 4 eine Temperatur von typischerweise 70-90 °C. Die beiden Durchführungen des Wärmetauschers 15 sind derart angeordnet, dass vom Kühlwasser im Motor 4 aufgenommene Wärme an den Kraftstoff übertragen werden kann. Dadurch wird der Kraftstoff erwärmt, bevor er der Einspritzvorrichtung 6 zugeführt wird. Der erwärmte Kraftstoff führt letztlich, wie bereits weiter oben ausgeführt wurde, zu einer besseren Verbrennung im Zylinder 8. Als weiterer Effekt ergibt sich durch den Wärmeentzug im Wärmetauscher 15 eine Temperaturverminderung des Kühlwassers, so dass der Kühler 13 unterstützt und eine Überhitzung des Kühlwassers auch bei hohen Aussentemperaturen und hoher Motorbelastung vermieden wird. Zwischen dem Wärmetauscher 15 und der Einspritzvorrichtung 6 kann die Kraftstoffleitung isoliert sein, um eine Abkühlung des Kraftstoffs zu verhindern. Diese Massnahme kann besonders dann angezeigt sein, wenn die Distanz zwischen dem Wärmetauscher 15 und der Einspritzvorrichtung 6 verhältnismässig gross ist.

Die dargestellte Vorrichtung 14 zum Temperieren des Kraftstoffs umfasst im Weiteren eine Heizvorrichtung 16 mit einem Heizdraht, welcher im Wärmetauscher 15 angrenzend an die Kraftstoffdurchführung angeordnet ist. Die Heizvorrichtung 16 wird durch eine Heizungssteuerung 17 kontrolliert, welche mit einem Temperatursensor 18 gekoppelt ist. Der Temperatursensor 18 ist in der Kühlwasserleitung, zwischen dem Motor 4 und dem Wärmetauscher 15 der erfindungsgemässen Vorrichtung 14, vorgesehen und misst die Temperatur des Kühlwassers nach dem Durchgang durch den Motor 4. Wenn diese Temperatur einen gewissen Wert unterschreitet, wird die Heizvorrichtung 16 unterstützend eingeschaltet. Sobald die Kühlwassertemperatur zum Temperieren des Kraftstoffs ausreicht, wird die Heizvorrichtung 15 durch die Heizungssteuerung 17 abgeschaltet. Möglich ist auch eine kontinuierliche Regelung der Heizleistung abhängig von der gemessenen Temperatur.

Das Ein- und Ausschalten bzw. die Regelung der Heizleistung kann sowohl durch herkömmliche Bauteile wie Thermostaten und Relais erfolgen als auch durch eine mikroprozessorbasierte Steuerung. Es ist zudem möglich, für die Steuerung der Heizvorrichtung 16 auch weitere oder andere Parameter zu messen und auszuwerten, wie z. B. die Kraftstofftemperatur vor bzw. nach dem Durchgang durch den Wärmetauscher 15, die Kühlwassertemperatur nach dem Durchgang durch den Wärmetauscher, die Motortemperatur oder weitere von der Motorelektronik (z. B. einer Lambda-Sonde) ermittelte Werte. Die Stromversorgung der Heizvorrichtung 15 und der Heizungssteuerung 17 erfolgt über das übliche 12 V- oder 24 V-Bordnetz. Die Heizvorrichtung 16 ist optional, die Erfindung kann auch ohne sie ausgeführt werden; in den weiteren Darstellungen ist sie zugunsten der Übersichtlichkeit nicht dargestellt. Die Heizvorrichtung 16 führt primär zu einem besseren Kaltstartverhalten des Motors und zu einer verbesserten Effizienz der erfindungsgemässen Vorrichtung in einer ersten Phase nach dem Einschalten des (kalten) Motors.

Die Figuren 2A,B sind schematische Darstellungen von Querschnitten durch den Wärmetauscher 15 der erfindungsgemässen Vorrichtung. Die Figur 2A zeigt einen Querschnitt durch die Längsachse des Wärmetauschers 15. Die Figur 2B zeigt einen Querschnitt in einer Ebene senkrecht zur Längsachse, entlang der Linie A-A' in der Figur 2A; gestrichelt dargestellt ist ausserdem ein Querschnitt in einer parallelen Ebene durch den zentralen Bereich des Wärmetauschers 15, entlang der Linie B-B'. Der Wärmetauscher 15 ist als doppelwandiges Rohr 20 aus Chromstahl ausgebildet. Die innere Rohrwand 21 begrenzt eine innere Kammer 23 mit einer im Wesentlichen kreiszylindrischen Form. Zwischen der inneren Rohrwand 21 und der äusseren Rohrwand 22 ist eine äussere Kammer 24 gebildet mit einem ringförmigen Querschnitt. Dazu sind die Längsenden der inneren Rohrwand 21 und der äusseren Rohrwand 22 miteinander fluiddicht verbunden, beispielsweise verschweisst.

Die äussere Rohrwand 22 des Rohrs 20 weist in einem bezüglich der Längsachse mittleren Abschnitt einen tangential rund um das Rohr 20 umlaufenden Wulst 25 auf, so dass der radiale Abstand zwischen der inneren Rohrwand 21 und der äusseren Rohrwand 22 in diesem Bereich vergrössert ist. In der äusseren Kammer 24 werden also zwei Aussenbereiche 24a,b gebildet mit einer ersten radialen Innenweite sowie ein zentraler Bereich 24c mit einer zweiten, grösseren radialen Innenweite. Der zentrale Bereich 24c ist ungefähr torusförmig. Die radiale Innenweite der Aussenbereiche 24a, b ist ungefähr 1 mm, während die radiale Innenweite des zentralen Bereichs 24c ungefähr 3-4 mm beträgt. Im Vergleich dazu beträgt die radiale Innenweite (also der Innendurchmesser) der inneren Kammer 23 ungefähr 30 mm.

Im zentralen Bereich 24c, d. h. am Wulst 25, sind bezüglich der Längsachse des Wärmetauschers 15 einander diametral gegenüberliegend zwei Stutzen 26, 27 angeordnet. Die Stutzen 26, 27 sind gleichartig ausgebildet und kommunizieren mit der äusseren Kammer 24. Die Stutzen 26, 27 verlaufen zunächst radial vom Wärmetauscher 15 weg, weisen dann eine 90°-Krümmung auf und verlaufen dann beide in derselben Richtung parallel zur Längsachse des Wärmetauschers 15. An ihrem offenen Ende weisen die Stutzen 26, 27 Verdickungen 26a, 27a auf. Die Länge der parallel verlaufenden Abschnitte entspricht ungefähr der Hälfte des Abstands zwischen dem zentralen Wulst 25 und dem offenen Ende des Rohrs 20. Die Stutzen 26, 27 haben einen kreisförmigen Querschnitt mit einem Innendurchmesser von ca. 3 mm.

Die äussere Rohrwand 22 weist mehrere tangential umlaufende, sägezahnartige Erhebungen 22a auf, wobei die langsam ansteigende Flanke jeweils dem näherliegenden offenen Ende des Rohrs 20 zugewandt ist und die steile Flanke dem zentralen Wulst 25.

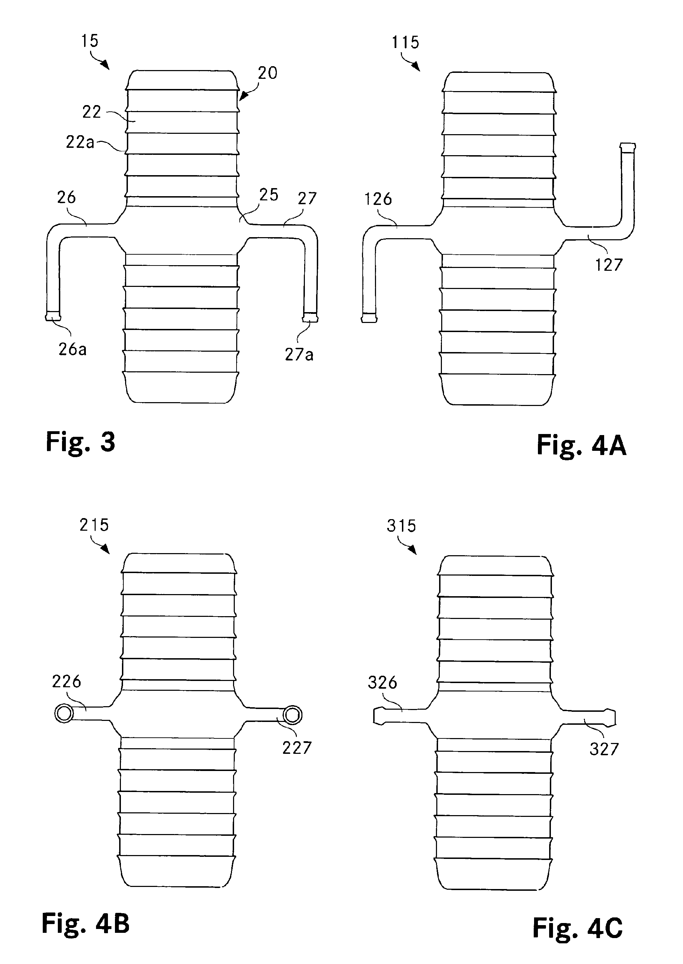

Die Figur 3 zeigt eine schematische Aussenansicht des Wärmetauschers 15. Sichtbar ist die äussere Rohrwand 22 des doppelwandigen Rohrs 20 mit den sägezahnartigen umlaufenden Erhebungen 22a. Im zentralen Abschnitt des Rohrs 20 ist der Wulst 25 ausgebildet, in dessen Bereich die zwei Stutzen 26, 27 zur Treibstoffzu- bzw. -wegführung angeordnet sind. Die Stutzen 26, 27 weisen an ihren offenen Enden Verdickungen 26a, 27a auf. Der Wärmetauscher 15 kann auf einfache Weise und damit kostengünstig hergestellt werden. Beispielsweise geht man von zwei Chromstahlrohren mit leicht unterschiedlichen Querschnitten aus. Am äusseren Rohr wird mittels eines Presswerkzeugs der Wulst 25 erzeugt, indem die äusseren Abschnitte des Rohrs kontrolliert gegeneinander geschoben werden. Auf ähnliche Weise können die sägezahnartigen Erhebungen 22a gebildet werden. Die Länge des äusseren Rohrs wird von Anfang an so gewählt, dass die Rohrlänge nach dem Längenverlust durch das Formen des Wulstes 25 und der Erhebungen 22a noch der Rohrlänge des inneren Rohres entspricht. Nun werden in der Wulstregion zwei diametral gegenüberliegende Öffnungen für den Anschluss der Stutzen 26, 27 gebohrt. Dann können die beiden Rohre an ihren äusseren Enden miteinander verschweisst werden, so dass die äussere Kammer in der Rohrwand des entstehenden doppelwandigen Rohrs 20 gebildet wird. Die Stutzen 26, 27 selbst werden aus entsprechenden dünneren Chromstahlrohren in an sich bekannter Weise geformt, wobei die Verdickungen 26a, 27a wiederum mittels eines Presswerkzeugs hergestellt werden. Schliesslich werden die beiden Stutzen 26, 27 an den Wulst 25 des Rohrs 20 angeschweisst.

Die Figuren 4A-C sind schematische Darstellungen von Varianten für den in der Figur 3 gezeigten Wärmetauscher 15. Die Varianten beziehen sich auf unterschiedlich ausgebildete Kraftstoffstutzen. Allgemein kann gesagt werden, dass die Form der Kraftstoffstutzen den Platzverhältnissen im Motor, der Führung der Kraftstoff- und Kühlwasserleitungen, den verwendeten Befestigungsmitteln für die Leitungen am Wärmetauscher und dem verwendeten Herstellungsverfahren für den Wärmetauscher angepasst werden kann. Beim in der Figur 4A dargestellten Wärmetauscher 115 sind die beiden Stutzen 126, 127 an sich gleich ausgebildet wie beim bisher im Zusammenhang mit den Figuren 2 und 3 beschriebenen Wärmetauscher 15. Der einzige Unterschied besteht darin, dass der parallel zur Längsachse des Wärmetauschers 115 verlaufende Endabschnitt des Stutzens 127 in eine gegenüber dem Endabschnitt des anderen Stutzens 126 entgegengesetzte Richtung verläuft. Eine derartige Ausrichtung ist z. B. dann von Vorteil, wenn die Kraftstoffleitung beim vorgesehenen Einbauort des Wärmetauschers 115 annähernd parallel zur Kühlwasserleitung verläuft.

In der Figur 4B ist eine weitere Variante eines Wärmetauschers 215 dargestellt, bei welchem die Stutzen 226, 227 wiederum zunächst radial vom Wärmetauscher 215 weggerichtet sind und dann eine 90°-Krümmung aufweisen. Die Krümmung ist aber nun so gerichtet, dass die Stutzen 226, 227 im weiteren Verlauf senkrecht zur Längsachse des Wärmetauschers 215 orientiert sind. Dargestellt ist derjenige Fall, in welchem die Stutzen 226, 227 in dieselbe Richtung verlaufen, es ist aber auch möglich, die Krümmungen so auszubilden, dass die Endabschnitte der Stutzen in entgegengesetzte Richtungen senkrecht zur Längsachse des Wärmetauschers 215 verlaufen. Durch diese Anordnungen der Stutzen 226, 227 wird die Befestigung der Kühlwasserleitung am Wärmetauscher 215, welche weiter unten eingehender beschrieben ist, geringstmöglich behindert. Sie ist also dann vorteilhaft, wenn möglichst die ganze Länge der äusseren Abschnitte des Wärmetauschers 215 frei zugänglich sein soll, oder wenn in axialer Richtung nur ein äusserst schmaler Bereich zum Zu- und Wegführen der Kraftstoffleitung zur Verfügung steht.

Die Figur 4C zeigt eine dritte Variante eines Wärmetauschers 315, bei welcher die Stutzen 326, 327 lediglich als gerade, radial vom Wärmetauscher 315 weg verlaufende Rohre ausgebildet sind. Dadurch wird der Herstellungsaufwand minimiert und die Vorrichtung kann so kompakt wie möglich aufgebaut werden. Bei dieser Variante muss allerdings sichergestellt sein, dass die Kraftstoffleitung zugentlastet ist und dass in der radialen Richtung von der Kühlwasserleitung weg genügend Platz im Motorraum vorhanden ist.

Es sind weitere Varianten denkbar: So kann beispielsweise einer der Stutzen eine 90°-Biegung aufweisen (wie in den Figuren 3, 4A, 4B dargestellt), während der andere Stutzen gerade (wie in der Figur 4C dargestellt) ist. Die Biegungswinkel können von 90° verschieden, insbesondere kleiner, sein. Die Endabschnitte der Stutzen können zudem in eine Richtung weisen, welche weder parallel ist zur Längsachse des Wärmetauschers noch senkrecht dazu. Den dargestellten Varianten ist gemeinsam, dass die Stutzen zunächst radial vom Wärmetauscher wegführen. Dadurch wird - wie bereits weiter oben beschrieben - eine optimale Zirkulation des Kraftstoffs in der äusseren Kammer des Wärmetauschers erreicht. Alternativ können die Stutzen aber auch bereits schräg vom Wärmetauscher wegführen. In diesem Fall kann die Zirkulation z. B. durch die Anbringung von Leitblechen innerhalb der äusseren Kammer optimiert werden.

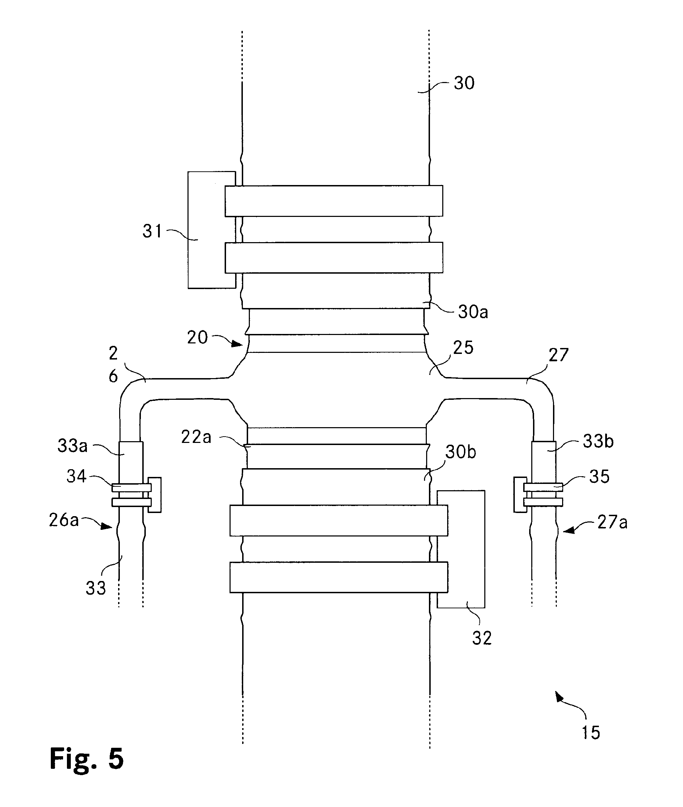

Die Figur 5 zeigt wiederum eine schematische Aussenansicht des in den Figuren 2 und 3 dargestellten Wärmetauschers, wobei dieser nun an den Kühlwasser- und Kraftstoffleitungen angebracht ist. Zur Montage des Wärmetauschers 15 in einem bestehenden Motor wird mit Vorteil zunächst das Kühlwasser aus dem Kühlwasserkreislauf abgelassen. Dann wird die Kühlwasserleitung 30 an einem passenden Ort zerschnitten. Die beiden Enden 30a, 30b der Kühlwasserleitung 30 beidseitig der Trennstelle werden nun auf die beiden äusseren Abschnitte des doppelwandigen Rohrs 20 des Wärmetauschers 15 geschoben. Der Aussendurchmesser des Rohrs 20 ist so gewählt, dass die Kühlwasserleitung beim Aufschieben leicht aufgeweitet wird. Die langsam ansteigenden Flanken der Erhebungen 22a sind den offenen Enden des Wärmetauschers 15 zugewandt und setzen so dem Aufschieben der Kühlwasserleitung 30 nur einen sehr geringen Widerstand entgegen und unterstützen das Aufweiten. Die Kühlwasserleitung 30 muss nur soweit auf das Rohr 20 aufgeschoben werden, bis eine dichtende Befestigung ermöglicht ist. Je nach den räumlichen Verhältnissen kann die Kühlwasserleitung aber bis an den zentralen Wulst 25 hinan geschoben werden. Soll der Wärmetauscher 15 in die Kühlwasserleitung 30 möglichst so eingebaut werden, dass der Verlauf der Leitung nicht geändert wird, kann ein Stück, dessen Länge ungefähr der axialen Breite des Wulstes 25 entspricht, aus der Kühlwasserleitung 30 herausgetrennt werden.

Nachdem die Kühlwasserleitung 30 aufgeschoben worden ist, ist sie aufgrund ihrer Elastizität und der sägezahnartigen Erhebungen 22a zunächst am Rohr 20 des Wärmetauschers 15 gehalten. Neben einer axialen Sicherung wirken die Erhebungen 22a gleichzeitig als hintereinander mehrstufig angeordnete Dichtungen gegen ein Austreten von Kühlwasser entlang der Aussenseite des Wärmetauschers 15. Die Kühlwasserleitung 30 wird zusätzlich mit an sich bekannten Mitteln am Rohr 20 des Wärmetauschers 15 fixiert, z. B. beidseitig mittels je einer Schlauchbride 31, 32.

Die Befestigung der Kraftstoffleitung 33 am Wärmetauscher 15 erfolgt auf ähnliche Weise. Zunächst wird auch die Kraftstoffleitung 33 durchtrennt. Die beiden Enden 33a, 33b der Kraftstoffleitung 33 beidseitig der Trennstelle werden nun auf die Endabschnitte der Stutzen 26, 27 geschoben.

Die Kraftstoffleitung 33 wird mindestens soweit auf die Stutzen 26, 27 aufgeschoben, bis eine dichtende Befestigung ermöglicht ist. Je nach den räumlichen Verhältnissen kann die Kraftstoffleitung aber bis an die Krümmung der Stutzen 26, 27 hinan geschoben werden. Nachdem die Kraftstoffleitung 33 aufgeschoben worden ist, ist sie aufgrund der Verdickungen 26a, 27a an den offenen Enden der Stutzen 26, 27 zunächst an den Stutzen 26, 27 gehalten. Die Kraftstoffleitung 33 wird schliesslich zusätzlich mit an sich bekannten Mitteln an den Stutzen 26, 27 fixiert, z. B. je durch eine Schlauchbride 34, 35.

Zuletzt muss nun noch die Kraftstoffzuführung entlüftet werden. Dies erfolgt in an sich bekannter Weise z. B. durch Betätigen einer dazu vorgesehenen, an der Zuführung angeordneten Handpumpe. Dadurch wird vermieden, dass die Treibstoffzuführung durch Bildung von Luftblasen beeinträchtigt wird.

Im Betrieb fliesst das im Motor erwärmte Kühlwasser von der Kühlwasserleitung 30 auf geradem Weg durch die innere Kammer des erfindungsgemässen Wärmetauschers 15 und weiter wieder in die Kühlwasserleitung 30. Der Kraftstoff gelangt aus der Kraftstoffleitung 33 in den ersten Stutzen 26, daraufhin in die äussere Kammer des Wärmetauschers 15 und von dort durch den zweiten Stutzen 27 weiter wieder in die Kraftstoffleitung 33. Die beiden Stutzen 26, 27 sind durch den Wulst 25, d. h. durch den Bereich der äusseren Kammer mit der grösseren Innenweite zusammenhängend miteinander verbunden. Dies sorgt zum einen für Sicherheit, weil durch den erfindungsgemässen Wärmetauscher 15 die Gefahr einer Verstopfung der Kraftstoffzuführung nicht erhöht wird. Zum Anderen sind die Stutzen 26, 27, der Wulst 25 und der Rest der äusseren Kammer so geformt und dimensioniert, dass der Kraftstoff (ausser im "Notfall", bei Verstopfungen in den Bereichen mit geringerer Innenweite) nicht auf geradem Weg durch den Wulstbereich fliesst, sondern in der gesamten äusseren Kammer umgewälzt wird.

Durchgeführte Versuche mit einem Dieselaggregat haben ergeben, dass durch den Einbau der erfindungsgemässen Vorrichtung zur Temperierung des Kraftstoffs eine Dieseleinsparung von 20-27 % erreicht wurde. Gleichzeitig verminderten sich die abgegebenen Abgase um durchschnittlich 30%. Im Weiteren wurde eine verbesserte Laufkultur des Motors festgestellt, namentlich eine erhöhte Laufruhe, ein besseres Startverhalten und eine erhöhte Leistung. Eine Inspektion des Wärmetauschers nach Abschluss des Versuchs hat keinerlei Beeinträchtigungen ergeben, namentlich konnten keine Paraffinablagerungen in der äusseren Kammer des Wärmetauschers festgestellt werden. Die Versuche haben schliesslich gezeigt, dass der durch den Wärmetauscher bewirkte Druckabfall in der Treibstoffzuführung derart gering ist, dass die Zufuhr von Kraftstoff nicht beeinträchtigt wird.

Die Kraftstoffzuführ- und -wegführstutzen müssen nicht (oder nicht beide) in der Mitte des Wärmetauschers angeordnet sein, sie können näher an den Längsenden des Rohrs positioniert werden. Dabei ist lediglich darauf zu achten, dass die Kühlwasserleitung sicher am Wärmetauscher angeschlossen werden kann. Falls die beiden Stutzen axial nicht auf derselben Höhe angebracht sind, aber trotzdem aus Sicherheits- und Effizienzgründen ein Wulst angeordnet werden soll, kann dieser schräg entlang der Aussenseite des Wärmetauschers verlaufen. Der Wulst erfüllt zudem im Allgemeinen seine Sicherheitsfunktion auch dann, wenn er nicht um die ganze Vorrichtung umläuft, solange nur die beiden Stutzen in einem zusammenhängenden Wulstbereich liegen. Der Wulst kann bei zwei Stutzen, die einander gegenüberliegend auf derselben axialen Höhe angeordnet sind, also beispielsweise lediglich halb (180°) um den Wärmetauscher tangential umlaufen.

Die Befestigung der Kühlwasserleitung bzw. der Kraftstoffleitung kann auch auf andere Weise erfolgen als im obigen Beispiel dargestellt. So können die Leitungen auch innen in die Anschlüsse bzw. Stutzen des Wärmetauschers eingeschoben werden. Die Profilierungen (Erhebungen bzw. Verdickungen) können wahlweise weggelassen werden, wenn die axiale Sicherung und eine genügende Abdichtung anderweitig durch die Befestigung gewährleistet wird. Anstelle von Briden können zur Befestigung der Leitungen spezielle Anschlüsse, z. B. besonders bedienungsfreundliche Steckanschlüsse, vorgesehen sein. Ähnlicherweise können bridenartige Befestigungsmittel fest am Wärmetauscher angeordnet sein. Je nach Material der Kühlwasser- bzw. Kraftstoffleitung und je nach Ausführung der Profilierungen kann ein fester Halt auch ganz ohne zusätzliche Befestigungsmittel erreicht werden.

Auch die Herstellung des Wärmetauschers kann auf andere Weise erfolgen. So kann das Doppelrohr beispielsweise durch Edelstahlguss hergestellt werden oder das Verschweissen der einzelnen Teile erfolgt an anderen Stellen.

Zusätzlich oder anstelle des beschriebenen Wärmetauschers zum Erwärmen des Kraftstoffs kann ein Wärmetauscher zum Kühlen des Kraftstoffs vorgesehen werden. Falls sowohl ein Wärmetauscher zum Erwärmen als auch einer zum Abkühlen vorhanden sind, wird der Durchfluss des Kühlwassers bzw. des Kühlmittels durch die Wärmetauscher mittels Ventile gesteuert, so dass wahlweise eine Erwärmung oder eine Abkühlung erfolgen kann.

Schliesslich ist darauf hinzuweisen, dass die angegebenen absoluten Dimensionen der Vorrichtung lediglich als Beispiel für eine bevorzugte Variante dienen sollen. Die Grösse der Vorrichtung kann aber der Anordnung und den Dimensionen der Kühlwasser- und der Kraftstoffleitungen sowie den Platzverhältnissen im Motor individuell angepasst werden.

Zusammenfassend ist festzustellen, dass durch die Erfindung eine Vorrichtung zum Temperieren von Kraftstoff geschaffen wird, welche effizient funktioniert, einfach und kompakt aufgebaut ist und sich einfach bei bestehenden Motoren nachrüsten lässt.

## Patentansprüche

1. Vorrichtung zum Temperieren von Kraftstoff für Verbrennungsmotoren, insbesondere Dieselmotoren, mit Wasserkühlung, umfassend einen Wärmetauscher (15; 115; 215; 315), welcher zur Wärmeübertragung mit einer Kühlwasserleitung (30) und einer Kraftstoffleitung (33) koppelbar ist, wobei der Wärmetauscher (15; 115; 215; 315) eine innere, rohrartige Kammer (23) aufweist, welche mit der Kühlwasserleitung (30) koppelbar ist, sowie eine äussere Kammer (24), welche die innere Kammer (23) mantelseitig umschliesst und mit der Kraftstoffleitung (33) koppelbar ist, **dadurch gekennzeichnet, dass** eine maximale radiale Innenweite der äusseren Kammer (24) höchstens ein Viertel, bevorzugt höchstens ein Sechstel, einer maximalen radialen Innenweite der inneren Kammer (23) beträgt.

2. Vorrichtung nach Anspruch 1, **dadurch gekennzeichnet, dass** die innere, rohrartige Kammer (23) im Wesentlichen kreiszylindrisch ist mit einem Durchmesser von 15-40 mm und dass ein Hauptteil (24a, 24b) der äusseren Kammer (24) eine radiale Innenweite von 1-3 mm aufweist.

3. Vorrichtung nach Anspruch 1 oder 2, **dadurch gekennzeichnet, dass** der Wärmetauscher (15; 115; 215; 315) als doppelwandiges Rohr (20) ausgebildet ist, wobei die äussere Kammer (24) in einer Rohrwand (21, 22) vorgesehen ist.

4. Vorrichtung nach einem der Ansprüche 1 bis 3, **gekennzeichnet durch** einen ersten Stutzen (26; 126; 226; 326) zur Kraftstoffzuführung sowie einen zweiten Stutzen (27; 127; 227; 327) zur Kraftstoffabführung, welche mit der äusseren Kammer (24) gekoppelt sind, wobei der erste Stutzen (26; 126; 226; 326) an einem ersten Kopplungsort von der äusseren Kammer (24) im Wesentlichen radial wegführt und wobei der zweite Stutzen (27; 127; 227; 327) an einem zweiten Kopplungsort von der äusseren Kammer (24) im Wesentlichen radial wegführt.

5. Vorrichtung nach Anspruch 4, **dadurch gekennzeichnet, dass** der erste Kopplungsort dem zweiten Kopplungsort bezüglich einer Hauptachse des Wärmetauschers (15; 115; 215; 315) im Wesentlichen diametral gegenüberliegt.

6. Vorrichtung nach einem der Ansprüche 4 oder 5, **dadurch gekennzeichnet, dass** die äussere Kammer (24) einen ersten Bereich (24a, 24b) aufweist und einen zusammenhängenden, flächenmässig kleineren zweiten Bereich (24c) mit einer gegenüber dem ersten Bereich (24a, 24b) vergrösserten radialen Innenweite, wobei sowohl der erste als auch der zweite Kopplungsort im zweiten Bereich (24c) vorgesehen sind.

7. Vorrichtung nach Anspruch 6, **dadurch gekennzeichnet, dass** der zweite Bereich (24c) durch einen tangential umlaufenden Wulst (25) gebildet ist.

8. Vorrichtung nach einem der Ansprüche 1 bis 7, **dadurch gekennzeichnet, dass** der Wärmetauscher (15; 115; 215; 315) aus nichtrostendem Stahl (INOX), insbesondere aus Chromstahl, gefertigt ist.

9. Vorrichtung nach einem der Ansprüche 1 bis 8, **dadurch gekennzeichnet, dass** der Wärmetauscher (15; 115; 215; 315) an seinen Enden Abschnitte aufweist, welche zum Befestigen der Kühlwasserleitung (30) ausgebildet sind.

10. Vorrichtung nach einem der Ansprüche 1 bis 9, **gekennzeichnet durch** eine am Wärmetauscher (15; 115; 215; 315) angeordnete Heizeinrichtung (16) und eine Heizungssteuerung (17), **durch** welche die Heizeinrichtung (16) bei einer nicht ausreichenden Temperatur des Kühlwassers eingeschaltet und bei einer ausreichenden Temperatur ausgeschaltet wird.

11. Vorrichtung nach einem der Ansprüche 1 bis 10, **gekennzeichnet durch** eine schraubenförmige Rohrschlange, welche mit ihrem Aussendurchmesser passend in die innere, rohrartige Kammer (23) einschiebbar ist.

12. Verbrennungsmotor umfassend einen Kühlkreislauf (10) zur Wasserkühlung und eine Kraftstoffzuführung (2, 3, 5), **gekennzeichnet durch** eine Vorrichtung nach einem der Ansprüche 1 bis 11, deren Wärmetauscher (15; 115; 215; 315) mit einer Kühlwasserleitung (30) des Kühlkreislaufs (10) sowie mit einer Kraftstoffleitung (33) der Kraftstoffzuführung (2, 3, 5) gekoppelt ist.
